Europäisches Patentamt

European Patent Office

Office européen des brevets

(11) Veröffentlichungsnummer: **0 379 919**
**A2**

## (12) EUROPÄISCHE PATENTANMELDUNG

(21) Anmeldenummer: **90100730.2**

(22) Anmeldetag: **15.01.90**

(51) Int. Cl.5: **G01D 11/30, G12B 5/00**

(30) Priorität: **24.01.89 CS 454/89**

(43) Veröffentlichungstag der Anmeldung:
**01.08.90 Patentblatt 90/31**

(84) Benannte Vertragsstaaten:
**CH DE FR GB LI SE**

(71) Anmelder: **PRVNI BRNENSKA STROJIRNA KONCERNOVY PODNIK**
**Olomoucka 7/9**
**Brno(CS)**

(72) Erfinder: **Fiala, Stanislav, Dipl.-Ing.**
**Babickova 40**
**Brno(CS)**
Erfinder: **Bocek, Vlastislav**
**Uvoz 116**
**Brno(CS)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Vorrichtung zum Einstellen eines Lagedetektorträgers in die Achse eines teilzylindrischen Maschinenteils.**

(57) Gegenstand der Erfindung ist eine Vorrichtung zum Einstellen eines Lagedetektorträgers in die Achse einer teilzylindrischen Bezugsfläche, bei der an einem auf mindestens einer Bezugsfläche (100) des Maschinenteils (1) ein Querträger (2) vertikal verstellbar angeordnet ist, der in seinem mittleren Teil eine horizontal verstellbare Halterung (4) für den Lagedetektor und eine vertikal verstellbare Tragkonstruktion (3) für ein Viereck (320) trägt, das mit seinen Eckpunkten (324) die Zylinderfläche (110) des Maschinenteils (1) kontaktiert.

FIG.1

EP 0 379 919 A2

## Vorrichtung zum Einstellen eines Lagedetektorträgers in die Achse eines teilzylindrischen Maschinenteils

Die Erfindung betrifft eine Vorrichtung zum Einstellen eines Lagedetektorträgers in die Achse einer halbzylindrischen Innenfläche eines großen Werkstücks mit Hilfe eines Hauptträgers und eines Systems von Justierelementen.

Geräumige und schwere Werkstücke und Maschinenteile müssen zur Bearbeitung so eingestellt und eingespannt werden, daß die Achsen der nachfolgend erzeugten rotationssymmetrischen Teilaussparungen mit der Hauptachse des Werkstücks zusammenfallen. Zu derartigen Werkstücken gehören beispielsweise längsgeteilte Gehäuse von Turbinen, Kompressoren od. dgl., in deren Innenwand Ringnuten zur Aufnahme von Schaufeln eingearbeitet werden müssen und bei denen die Hauptachse durch die Lageröffnungen bestimmt wird. Um die Einstellung der einzelnen Werkstückteile in Bezug auf die Halbzylinderflächen der Lageröffnungen zu ermöglichen, müssen die Mittelpunkte der Halbzylinderflächen der vorderen und hinteren Lageröffnung ermittelt und eindeutig definiert werden, um den Träger eines Meßgeräts an diesen Punkten justieren zu können und/oder die Koordinatenachsen der automatischen Werkzeugmaschine auf die Lage der Werkstückachse abstimmen zu können. Bei großen schwergewichtigen hohlzylindrischen Gehäusehälften wird die Längsachse häufig durch einen Laserstrahl definiert.

Aufgabe der Erfindung ist es, die Längsachse einer Zylinderfläche genau zu bestimmen und einen Träger mit z. B. einer kalibrierten Öffnung oder einem Dornenpaar zur Fixierung eines elektrooptischen Detektors in die ermittelte Längsachse zu justieren.

Gegenstand der Erfindung ist daher eine Vorrichtung zum Einstellen eines Lagedetektorträgers in die Achse einer teilzylindrischen Werkstückfläche, der vorzugsweise ebene Bezugsflächen zugeordnet sind, wobei die Lösung der Erfindungsaufgabe mit den im Patentanspruch 1 angegebenen Mitteln erfolgt.

Der Kern der Erfindung besteht darin, daß im Mittelteil eines Trägers einerseits eine querliegende verschiebbare Führung zugerichtet wird, deren Achse senkrecht zur Längsachse des Trägers liegt und an deren Ende parallel mit dieser Längsachse eine Berührungsplatte mit Endkontakten gelagert ist, die symmetrisch zur Achse einer Querführung angeordnet ist, andererseits ein länglicher Support gebildet wird, dessen Achse parallel zur Längsachse des Trägers verläuft und der eine Meßplatte mit kalibrierter Öffnung und Dornen trägt und weiterhin ein längliches Bett geformt wird, dessen ebene Funktionsfläche parallel mit der Längsachse des Trägers und senkrecht zur Achse der verschiebbaren Querführung liegt und ein querliegendes Bett, dessen ebene Funktionsfläche senkrecht zur Längsachse des Trägers verläuft, und daß an jedem Ende des Trägers eine mikrometrische Schraube angeordnet und eine Spanneinrichtung zur elastischen Verbindung des Trägers mit dem Werkstückkörper angeschlossen werden, in welchem die Bezugs-Zylinderfläche ausgebildet ist.

Die Vorrichtung zum Einstellen des Lagedetektorträgers nach der Erfindung weist den Vorteil auf, daß die Einstellung ihrer Grundposition durch Ausnutzen der senkrecht zur Vorrichtungsachse verschiebbaren Berührungsplatte vereinfacht und die anschließende genaue und eindeutige Einstellung der kalibrierten Trägeröffnung bzw. der Detektordorne zur Halterung des elektrooptischen Lagedetektors in die Achse der Zylinderfläche ermöglicht. Bei Verwendung von zwei solchen Vorrichtungen kann die Achse von künftigen Aussparungen genau vorbestimmt werden, und zwar auch in dem Falle, daß die ebenen Trennflächen der Körperteile mit einem bekannten Zusatz vorbearbeitet werden. Es kann auch festgestellt und genau bestimmt werden, ob sich während der Bearbeitung der Werkstückkörper verformt hat, falls die Verformung in den Endteilen des Körpers zur Geltung kommt. Vorteilhaft kann der zu bearbeitende Ma schinenteil mittels dieser Vorrichtung so eingestellt werden, daß seine Trennfläche in vertikaler Lage steht, in der der negative Einfluß der Körperdeformation durch das Eigengewicht weniger zur Geltung kommt.

Weitere Vorteile und Besonderheiten ergeben sich aus der folgenden Beschreibung eines in der Zeichnung schematisch dargestellten Ausführungsbeispiels. Es zeigen:

Fig. 1 die an ein halbzylindrisches Werkstück angebaute Justiervorrichtung;

Fig. 2 die Auflageplatte mit den an der Zylinderfläche anliegenden Kontaktpunkten der Vorrichtung nach Fig. 1 in Draufsicht des Pfeils P.

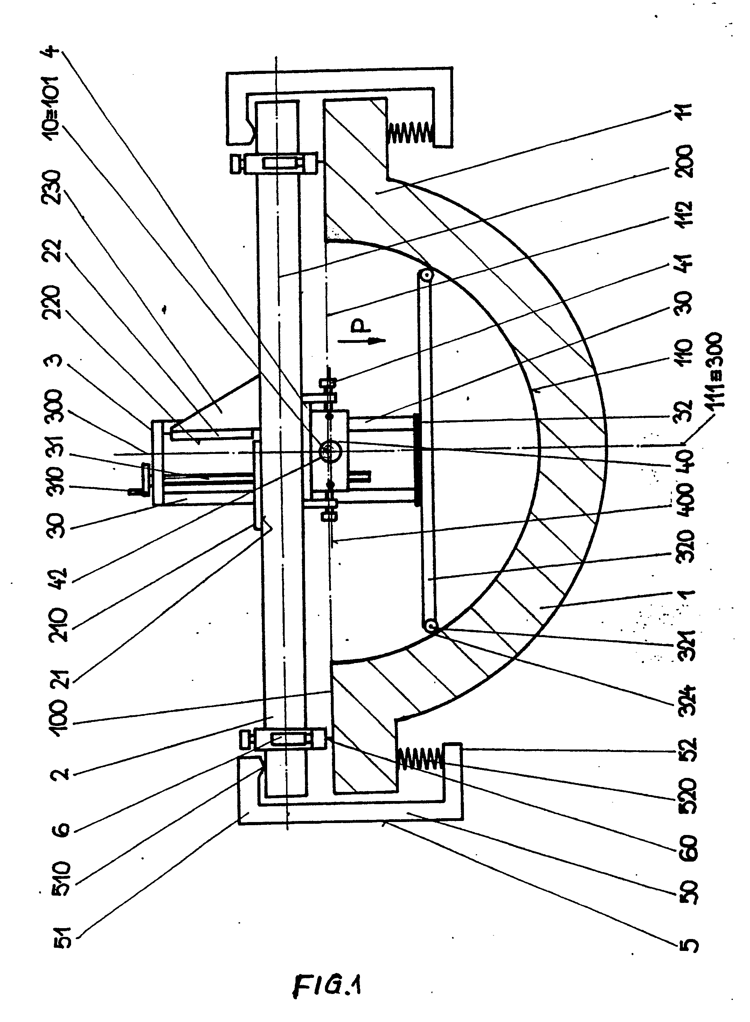

Der in Fig. 1 im Querschnitt dargestellte halbzylindrische Werkstückkörper 1 besitzt zwei seitliche Flansche 11, deren Oberflächen Bezugsflächen 100 darstellen. Die halbe Zylinderfläche 110 hat den Mittelpunkt 10 im Schnittpunkt der senkrechten Achse 111 und der in der Bezugsfläche 100 liegenden waagerechten Achse 112. Die Justiervorrichtung enthält einen Träger 2 mit horizontaler Längsachse 200, der an beiden Enden Mikrometerschrauben 6 aufweist, deren Endkontakte 60 die Bezugsfläche 100 kontaktieren. Der Träger 2 ist mit dem Werkstück 1 elastisch durch zwei Spanneinrichtungen 5 zusammengespannt, die je einen Bügel 50 aufweisen, deren oberer Arm 51 punktförmig auf dem Träger 2 aufliegt und deren unterer Arm 52 über eine Druckfeder 520 auf die Unterseite des Flansches 11 einwirkt.

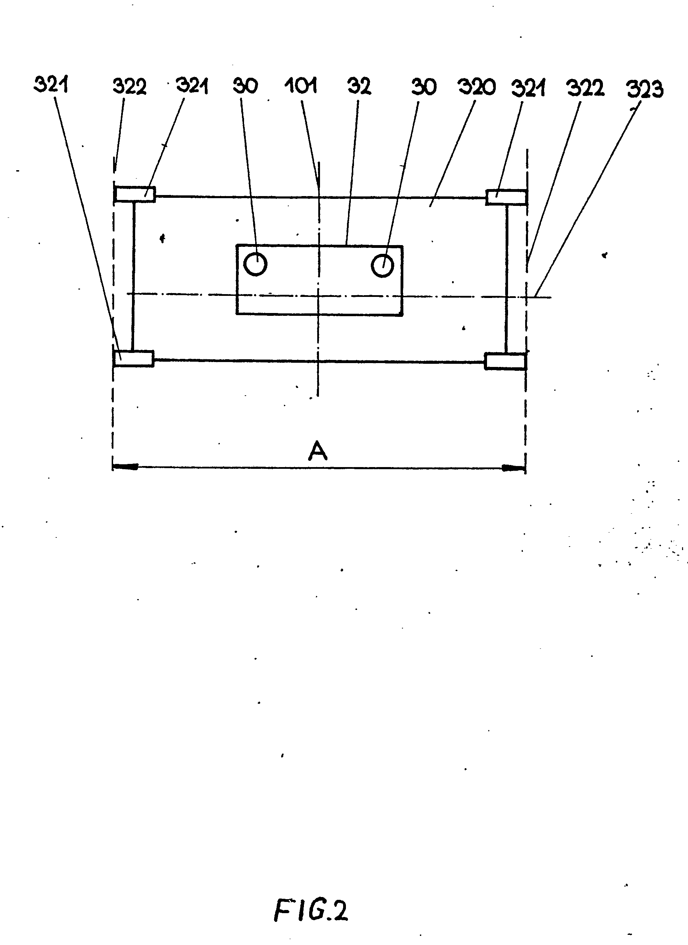

Am Mittelteil des Trägers 2 ist eine Querführung 3 mit einer Vertikalachse 300 angeordnet, die zwei miteinander durch eine obere Querplatte verbundene Schubstangen 30 enthält. Diese Schubstangen 30 sind in einer Führung verschiebbar gelagert und werden mittels einer Schraubspindel 31 und einem Drehkopf 310 vertikal gegenüber dem Träger verstellt. Die freien Enden der Schubstangen 30 sind durch eine Tragplatte 32 verbunden, an der eine Platte 320 befestigt ist. An den Ecken dieser Platte 320 sind die vier Wälzkörperkontakte 321 gelagert, wie Fig. 2 zeigt. In dieser Fig. 2 sind auch die Tragplatte 32 und die vier Wälzkörperkontakte 321 dargestellt, deren Berührungspunkte zwei zueinander parallele Geraden 322 abstecken, die in der Zeichenebene um den Wert A entfernt sind und parallel zur Achse 101 der Zylinderfläche 110 nach Fig. 1 verlaufen.

Am Mittelteil des Trägers 2 ist ein Support 4 angeordnet, auf dem mittels einer nicht dargestellten Führung eine Meßplatte 40 in der Achsrichtung 400 parallel zur Längsachse 200 des Trägers 2 verschiebbar gelagert ist. Diese Meßplatte 40 hat eine kalibrierte Öffnung 42 und Dorne zur Befestigung eines Detektorträgers. Zur Lageeinstellung der Meßplatte 40 sind am Support 4 gegensinnig wirkende Justierschrauben 41 vorgesehen. Auf dem Mittelteil des Trägers 2 ist ferner eine längsgerichtete Lagerung 21 mit einer ebenen Funktionsfläche 210 angeordnet, die senkrecht zur Achse 300 der verschiebbaren Querführung 3 verläuft. An einem aufrechten Arm 230 ist eine Querlagerung 22 vorgesehen, deren Funktionsfläche 220 senkrecht zur Längsachse 200 des Trägers 2 und damit auch zur ebenen Funktionsfläche 210 der Längslagerung 21 steht.

Die Achseinstellung der kalibrierten Öffnung 42 in die Mitte 10 der Zylinderfläche 110 wird wie folgt vorgenommen.

An der Tragplatte 32 wird die Platte 320 befestigt, so daß die Verbindungslinie der Berührungspunkte 324 in den Berührungsgeraden 322 mit dem Mittelpunkt 10 der Zylinderfläche 110 einen etwa 90° großen Winkel einschließen. Danach werden die Enden 60 der Mikrometerschrauben 6 vorläufig so eingestellt, daß die Mitte der Öffnung 42 in der Nähe der horizontalen Achse 112 der Zylinderfläche 110 und damit auch in der Nähe der Ebene der beiden Bezugsflächen 100 liegt. Dann wird durch Drehen der Schraubspindel 31 mittels des Drehkopfes 310 die Platte 320 in Pfeilrichtung P ausgeschoben und die gesamte Vorrichtung wird mit Hilfe der Wälzkörperkontakte 321 auf die Zylinderfläche 110 aufgelegt. Dadurch wird der Träger 2 mit großer Genauigkeit in eine Lage senkrecht zur Längsachse der Zylinderfläche 110 eingestellt und zugleich wird die Mitte der kalibrierten Öffnung 42 in die Nähe der vertikalen Achse 111 der Zylinderfläche 110 gebracht. Durch Drehen der Schraubspindel 31 in Gegenrichtung wird die Platte 320 gegen die Pfeilrichtung P verschoben und der Träger 2 wird so weit abgesenkt, bis die Schraubenenden 60 die Bezugsflächen 100 berühren.

In dieser Phase wird durch Weiterdrehen der Schraube 31 die Berührung der Kontakte 321 mit der Zylinderfläche 110 hinuntergeschoben, wobei die Lage des Trägers 2 durch die Spanneinrichtung 5 bestimmt wird.

Im weiteren Schritt wird in die kalibrierte Öffnung 42 der Meßplatte 40 eine um die Achse dieser Öffnung schwenkbare Vorrichtung eingelegt, die an ihrem freien Ende ein geeignetes Meßgerät, z. B. eine Meßuhr, trägt. Durch stufenweises Verstellen der Meßplatte 40 mittels der Justierschraube 41 und durch Verstellen ihrer vertikalen Lage mit Hilfe der Mikrometerschrauben 6, die gleichzeitig den Träger 2 vertikal bewegen, wird eine solche Lage der kalibrierten Öffnung 42 gefunden, in welcher die Meßuhr am Ende des nicht dargestellten Armes eine minimale Abweichung anzeigt, die im vorgeschriebenen Toleranzbereich liegt. In solchem Falle ist die Einstellung der Lage der kalibrierten Öffnung 42 mit der verlangten Genauigkeit beendet.

Bei der Lageeinstellung eines größeren Maschinenteils, z. B. der Hälfte eines Turbinengehäuses zur Herstellung von Nuten für den Einbau von Schaufelreihen, genügt es, auf beide Enden der Gehäusehälfte je eine Vorrichtung nach der Erfindung aufzulegen und die Lagen beider Öffnungen 42 in Flucht mit der Achse der Zylinderflächen der beiden Lageröffnungen zu bringen. Durch nachfolgendes Einsetzen eines elektrooptischen Fühlers kann dann das Gehäuseteil gleichachsig mit dem Laserstrahl eingestellt werden. Soweit dieser Laserstrahl mit der Achse der Bearbeitungsmaschine zusammenfällt, kann die Bearbeitung mit hoher Genauigkeit durchgeführt werden.

Darüber hinaus kann mit Hilfe von Libellen und den Funktionsflächen 210 der Längslagerung 21 beider Träger 2 eine unerwünschte Verdrehung der beiden Bezugsflächen 100 durch eine Verformung des Gehäuseteils 1 bestimmt werden. Wenn das Maschinenteil bzw. die Gehäusehälfte 1 in der Bearbeitungsstation mit vertikalen Bezugsflächen 100 eingespannt wird, werden die Funktionsflächen 220 an den Armen 22 zur Halterung der Libellen od. dgl. angewendet. Für die elastische Halterung des Trägers 2 am Maschinenteil 1 kann vorteilhaft eine magnetische Spanneinrichtung eingesetzt werden, wie sie in der CS-Patentveröffentlichung PV 00168 beschrieben ist. Diese Einrichtung enthält eine durch verstellbare Stützen auf dem Werkstück abgestützte Halterung für den Träger und einen an der Halterung über eine längsverstellbare geführte Zugfeder angehängten Haftmagneten, der auf die Oberfläche des Trägers 2 abgesenkt werden kann.

Die Erfindung ist nicht auf die vorstehend beschriebene Vorrichtung beschränkt, sondern umfaßt auch gleichartig wirkende Justiervorrichtungen zur Achsbestimmung von teilzylindrischen Maschinenteilen mit einem Querträger und einer Vierpunktabstützung.

**Ansprüche**

1. Vorrichtung zum Einstellen einer Halterung für einen Lagedetektor od. dgl. in die Längsachse eines Maschinenteils mit teilzylindrischer Innenfläche und mindestens einer ebenen Bezugsfläche, **gekennzeichnet durch** einen auf der ebenen Bezugsfläche (100) des Maschinenteils (1) verstellbar abgestützten Querträger (2) und ein etwa mittig am Querträger (2) vertikal verstellbar angeordnetes Viereck (320), das mit seinen Ecken (324) die Zylinderfläche (110) kontaktiert, wobei die Halterung (40) für den Lagedetektor od. dgl. am mittleren Teil des Querträgers (2) vertikal und horizontal verstellbar angeordnet ist.

2. Vorrichtung nach Anspruch 1, dadurch gekennzeichnet, daß am Querträger (2) eine Querführung (3) verschiebbar montiert ist, deren Achse (300) senkrecht zur Längsachse (200) des Querträgers (2) verläuft und an deren zur Achse (300) parallelen mittels z. B. einer Schraubspindel (31) gegenüber dem Querträger (2) verstellbaren Schubstangen (30) das Viereck (320) montiert ist.

3. Vorrichtung nach Anspruch 1 und 2, dadurch gekennzeichnet, daß der Querträger (2) über Mikrometerschrauben (6) auf zwei ebenen Bezugsflächen (100) eines halbzylindrischen Werkstücks (1) abgestützt und über zwei seitliche Spannvorrichtungen (5) elastisch mit dem Werkstück (1) verspannt ist.

4. Vorrichtung nach Anspruch 1 bis 3, dadurch gekennzeichnet, daß die als Support (40) ausgebildete Detektorhalterung durch zwei seitliche gegensinnig wirksame Justierschrauben (41) horizontal verstellbar am Querträger (2) montiert ist und eine horizontale Öffnung (42) zur Aufnahme eines Tragteils des Detektors aufweist.

5. Vorrichtung nach Anspruch 1 bis 4, dadurch gekennzeichnet, daß am Querträger (2) je eine horizontale und vertikale Funktionsfläche (21 bzw. 22) zur Halterung z. B. einer Libelle vorgesehen sind.

6. Vorrichtung nach Anspruch 1 bis 5, dadurch gekennzeichnet, daß das Viereck (320) als rechteckige Platte oder Rahmen ausgebildet ist, an deren Ecken je ein Wälzkörperkontakt (321) gelagert ist.

7. Vorrichtung nach Anspruch 4, dadurch gekennzeichnet, daß die Achse (400) des Supports (40) parallel zur Längsachse (200) des Querträgers (2) verläuft.

8. Vorrichtung nach Anspruch 3, dadurch gekennzeichnet, daß jede Spannvorrichtung (5) einen seitlichen Spannbügel (50) enthält, deren oberer horizontaler Schenkel (51) punktförmig (510) auf der Oberfläche des Querträgers (2) aufliegt und auf deren unterem Schenkel (52) ein die Bezugsfläche (100) aufweisender seitlicher Flansch (11) des Maschinenteils (1) über eine Feder (520) abgestützt ist.

FIG.1

321  322  321  30  101  32  30  320  321  322  323

A

FIG.2